(19) Europäisches Patentamt European Patent Office Office européen des brevets

(11) **EP 4 427 989 A1**

(12) **EUROPEAN PATENT APPLICATION**

(43) Date of publication:
**11.09.2024 Bulletin 2024/37**

(21) Application number: **24162029.3**

(22) Date of filing: **07.03.2024**

(51) International Patent Classification (IPC):
**B60R 21/015** $^{(2006.01)}$ **B60R 21/01** $^{(2006.01)}$

(52) Cooperative Patent Classification (CPC):
**B60R 21/015;** B60R 21/01544; B60R 21/0155;
B60R 2021/01252; B60R 2021/01272

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2023 US 202363488797 P**
**05.03.2024 US 202418595652**

(71) Applicant: **Volvo Car Corporation**
**405 31 Göteborg (SE)**

(72) Inventors:
• **HEURLIN, Fredrik**
**40531 Göteborg (SE)**
• **BJÖRKLUND, Magnus**
**40531 Göteborg (SE)**
• **BJESSE, Lars**
**40531 Göteborg (SE)**
• **MARKLUND, Leif**
**40531 Göteborg (SE)**

(74) Representative: **Maiwald GmbH**
**Engineering**
**Elisenhof**
**Elisenstrasse 3**
**80335 München (DE)**

(54) **VEHICLE PASSENGER SPACE CONTACT MITIGATION**

(57) Vehicle passenger space contact mitigation (e.g., using a computerized tool) is enabled. For example, a system can comprise a memory that stores computer executable components, and a processor that executes the computer executable components stored in the memory, wherein the computer executable components comprise: a calculation component that determines a distance between an occupant of a vehicle and an object of the vehicle, and an impact mitigation component that, based on the distance, facilitates an action determined to mitigate an impact between the occupant and the object.

FIG. 1

EP 4 427 989 A1

# EP 4 427 989 A1

**Description**

CROSS-REFERENCE TO RELATED APPLICATIONS

This application claims priority to and the benefit of U.S. Provisional Patent Application Serial No. 63/488,797 filed on March 7, 2023, entitled "VEHICLE PASSENGER SPACE CONTACT MITIGATION."

TECHNICAL FIELD

The disclosed subject matter relates to vehicles (e.g., transportation vehicles) and, more particularly, to vehicle passenger space contact mitigation.

BACKGROUND

Vehicles conventionally possess a variety of safety systems and mechanisms, such as occupant restraint systems (e.g., seatbelts) and airbag systems. Such conventional systems are known to promote occupant safety. However, such conventional systems do not account for varying seating positions or sizes of occupants of vehicles. This can result in suboptimal situations, for instance, when the front seat is reclined and/or moved to a rearward position, which can result in a rear seat occupant being relatively close to the front seat, increasing the risk of contact between the rear seat occupant and the front seat in the event of a vehicular collision. Thus, depending on an occupant and/or seating position, an impact or contact between the occupant and an object of the vehicle can still occur.

The above-described background relating to vehicle safety systems and mechanisms is merely intended to provide a contextual overview of some current issues and is not intended to be exhaustive. Other contextual information may become further apparent upon review of the following detailed description.

SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, systems, devices, computer-implemented methods, apparatuses and/or computer program products that facilitate vehicle passenger space identification and/or contact mitigation are described.

As alluded to above, vehicle passenger space identification and/or contact mitigation can be improved in various ways, and various embodiments are described herein to this end and/or other ends.

According to an embodiment, a system can comprise a memory that stores computer executable components, and a processor that executes the computer executable components stored in the memory, wherein the computer executable components can comprise a calculation component that determines a distance between an occupant of a vehicle and an object of the vehicle, and an impact mitigation component that, based on the distance, facilitates an action determined to mitigate an impact between the occupant and the object.

According to another embodiment, a non-transitory machine-readable medium can comprise executable instructions that, when executed by a processor, facilitate performance of operations, comprising determining a distance between an occupant of a vehicle and an object of the vehicle, and based on the distance, facilitating an action determined to mitigate an impact between the occupant and the object.

According to yet another embodiment, a method can comprise determining, by a system comprising a processor, a distance between an occupant of a vehicle and an object of the vehicle, and based on the distance, facilitating, by the system, an action determined to mitigate an impact between the occupant and the object.

BRIEF DESCRIPTION OF DRAWINGS

FIG. 1 illustrates a block diagram of an exemplary system in accordance with one or more embodiments described herein.
FIG. 2 illustrates a block diagram of example, non-limiting computer executable components in accordance with one or more embodiments described herein.
FIG. 3 illustrates a block diagram of example, non-limiting vehicle electronic systems/devices in accordance with one or more embodiments described herein.

FIG. 4 illustrates a block diagram of example, non-limiting external devices in accordance with one or more embodiments described herein.

FIGs. 5A-5B illustrate block diagrams of exemplary systems in accordance with one or more embodiments described herein.

FIG. 6 illustrates a diagram of an example, non-limiting vehicle interior in accordance with one or more embodiments described herein.

FIGs. 7A-7B illustrates diagrams of example, non-limiting vehicle scenarios in accordance with one or more embodiments described herein.

FIG. 8 illustrates a flow diagram for a process associated with vehicle passenger space contact mitigation in accordance with one or more embodiments described herein.

FIG. 9 illustrates a block flow diagram for a process associated with vehicle passenger space identification in accordance with one or more embodiments described herein.

FIG. 10 illustrates a block flow diagram for a process associated with vehicle passenger space contact mitigation in accordance with one or more embodiments described herein.

FIG. 11 is an example, non-limiting computing environment in which one or more embodiments described herein can be implemented.

FIG. 12 is an example, non-limiting networking environment in which one or more embodiments described herein can be implemented.

## DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

The computer processing systems, computer-implemented methods, apparatus and/or computer program products described herein employ hardware and/or software to solve problems that are highly technical in nature (e.g., identify vehicle passenger space and/or mitigate contact), that are not abstract and cannot be performed as a set of mental acts by a human.

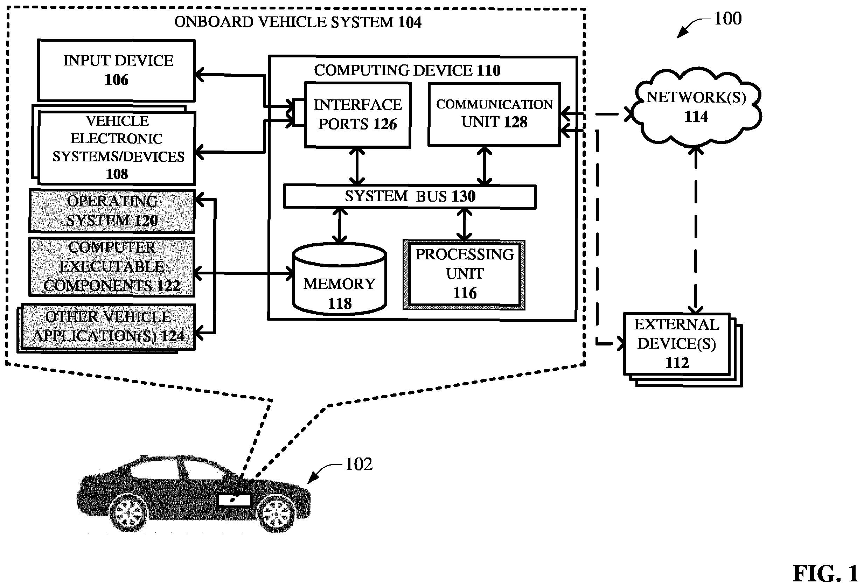

Turning now to FIG. 1, there is illustrated an example, non-limiting system 100 in accordance with one or more embodiments herein. System 100 can comprise a computerized tool, which can be configured to perform various operations relating to vehicle passenger space identification and/or contact mitigation. In accordance with various exemplary embodiments, system 100 can be deployed on or within a vehicle 102, (e.g., an automobile, as shown in FIG. 1). Although FIG. 1 depicts the vehicle 102 as an automobile, the architecture of the system 100 is not so limited. For instance, the system 100 described herein can be implemented with a variety of types of vehicles 102. Example vehicles 102 that can incorporate the exemplary system 100 can include, but are not limited to: automobiles (e.g., autonomous vehicles), airplanes, trains, motorcycles, carts, trucks, semi-trucks, buses, boats, recreational vehicles, helicopters, jets, electric scooters, electric bicycles, a combination thereof, and/or the like. It is additionally noted that the system 100 can be implemented in a variety of types of automobiles, such as battery electric vehicles, hybrid vehicles, plug-in hybrid vehicles, internal combustion engine vehicles, or other suitable types of vehicles.

As shown in FIG. 1, the system 100 can comprise one or more onboard vehicle systems 104, which can include one or more input devices 106, one or more other vehicle electronic systems and/or devices 108, and/or one or more computing devices 110. Additionally, the system 100 can comprise one or more external devices 112 that can be communicatively and/or operatively coupled to the one or more computing devices 110 of the one or more onboard vehicle systems 104 either via a one or more networks 114 and/or a direct electrical connection (e.g., as shown in FIG. 1). In various embodiments, one or more of the onboard vehicle system 104, input devices 106, vehicle electronic systems and/or devices 108, computing devices 110, external devices 112, and/or networks 114 can be communicatively or operably coupled (e.g., over a bus or wireless network) to one another to perform one or more functions of the system 100.

The one or more input devices 106 can display one or more interactive graphic entity interfaces ("GUIs") that facilitate accessing and/or controlling various functions and/or application of the vehicle 102. The one or more input devices 106 can display one or more interactive GUIs that facilitate accessing and/or controlling various functions and/or applications. The one or more input devices 106 can comprise one or more computerized devices, which can include, but are not limited to: personal computers, desktop computers, laptop computers, cellular telephones (e.g., smartphones or mobile devices), computerized tablets (e.g., comprising a processor), smart watches, keyboards, touchscreens, mice, a combination thereof, and/or the like. An entity or user of the system 100 can utilize the one or more input devices 106 to input data into the system 100. Additionally, the one or more input devices 106 can comprise one or more displays that can present one or more outputs generated by the system 100 to an entity. For example, the one or more displays can include, but are not limited to: cathode tube display ("CRT"), light-emitting diode display ("LED"), electroluminescent display ("ELD"), plasma display panel ("PDP"), liquid crystal display ("LCD"), organic light-emitting diode display ("OLED"), a combination thereof, and/or the like.

For example, the one or more input devices 106 can comprise a touchscreen that can present one or more graphical touch controls that can respectively correspond to a control for a function of the vehicle 102, an application, a function of the application, interactive data, a hyperlink to data, and the like, wherein selection and/or interaction with the graphical touch control via touch activates the corresponding functionality. For instance, one or more GUIs displayed on the one or more input devices 106 can include selectable graphical elements, such as buttons or bars corresponding to a vehicle navigation application, a media application, a phone application, a back-up camera function, a car settings function, a parking assist function, and/or the like. In some implementations, selection of a button or bar corresponding to an application or function can result in the generation of a new window or GUI comprising additional selectable icons or widgets associated with the selected application. For example, selection of one or more selectable options herein can result in generation of a new GUI or window that includes additional buttons or widgets with one or more selectable options. The type and appearance of the controls can vary. For example, the graphical touch controls can include icons, symbols, widgets, windows, tabs, text, images, a combination thereof, and/or the like.

The one or more input devices 106 can comprise suitable hardware that registers input events in response to touch (e.g., by a finger, stylus, gloved hand, pen, etc.). In some implementations, the one or more input devices 106 can detect the position of an object (e.g., by a finger, stylus, gloved hand, pen, etc.) over the one or more input devices 106 within close proximity (e.g., a few centimeters) to touchscreen without the object touching the screen. As used herein, unless otherwise specified, reference to "on the touchscreen" refers to contact between an object (e.g., an entity's finger) and the one or more input devices 106 while reference to "over the touchscreen" refers to positioning of an object within close proximity to the touchscreen (e.g., a defined distance away from the touchscreen) yet not contacting the touchscreen.

The type of the input devices 106 can vary and can include, but is not limited to: a resistive touchscreen, a surface capacitive touchscreen, a projected capacitive touchscreen, a surface acoustic wave touchscreen, and an infrared touchscreen. In various embodiments, the one or more input devices 106 can be positioned on the dashboard of the vehicle 102, such as on or within the center stack or center console of the dashboard. However, the position of the one or more input devices 106 within the vehicle 102 can vary.

The one or more other vehicle electronic systems and/or devices 108 can include one or more additional devices and/or systems (e.g., in addition to the one or more input devices 106 and/or computing devices 110) of the vehicle 102 that can be controlled based at least in part on commands issued by the one or more computing devices 110 (e.g., via one or more processing units 116) and/or commands issued by the one or more external devices 112 communicatively coupled thereto. For example, the one or more other vehicle electronic systems and/or devices 108 can comprise: seat motors, seatbelt system(s), airbag system(s), display(s), infotainment system(s), speaker(s), a media system (e.g., audio and/or video), a back-up camera system, a heating, ventilation, and air conditioning ("HVAC") system, a lighting system, a cruise control system, a power locking system, a navigation system, an autonomous driving system, a vehicle sensor system, telecommunications system, a combination thereof, and/or the like. Other example other vehicle electronic systems and/or devices 108 can comprise one or more sensors, which can comprise distance sensors, seats, seat position sensor(s), collision sensor(s), odometers, altimeters, speedometers, accelerometers, engine features and/or components, fuel meters, flow meters, cameras (e.g., digital cameras, heat cameras, infrared cameras, and/or the like), lasers, radar systems, lidar systems, microphones, vibration meters, moisture sensors, thermometers, seatbelt sensors, wheel speed sensors, a combination thereof, and/or the like. For instance, a speedometer of the vehicle 102 can detect the vehicle's 102 traveling speed. Further, the one or more sensors can detect and/or measure one or more conditions outside the vehicle 102, such as: whether the vehicle 102 is traveling through a rainy environment, whether the vehicle 102 is traveling through winter conditions (e.g., snowy and/or icy conditions), whether the vehicle 102 is traveling through very hot conditions (e.g., desert conditions), and/or the like. Example navigational information can include, but is not limited to: the destination of the vehicle 102, the position of the vehicle 102, the type of vehicle 102, the speed of the vehicle 102, environmental conditions surrounding the vehicle 102, the planned route of the vehicle 102, traffic conditions expected to be encountered by the vehicle 102, operational status of the vehicle 102, a combination thereof, and/or the like.

The one or more computing devices 110 can facilitate executing and controlling one or more operations of the vehicle 102, including one or more operations of the one or more input devices 106, and the one or more other vehicle electronic systems/devices 108 using machine-executable instructions. In this regard, embodiments of system 100 and other systems described herein can include one or more machine-executable components embodied within one or more machines (e.g., embodied in one or more computer readable storage media associated with one or more machines, such as computing device 110). Such components, when executed by the one or more machines (e.g., processors, computers, virtual machines, etc.) can cause the one or more machines to perform the operations described.

For example, the one or more computing devices 110 can include or be operatively coupled to at least one memory 118 and/or at least one processing unit 116. The one or more processing units 116 can be any of various available processors. For example, dual microprocessors and other multiprocessor architectures also can be employed as the processing unit 116. In various embodiments, the at least one memory 118 can store software instructions embodied as functions and/or applications that when executed by the at least one processing unit 116, facilitate performance of operations defined by the software instruction. In the embodiment shown, these software instructions can include one or more operating system 120, one or more computer executable components 122, and/or one or more other vehicle applications 124. For example, the one or more operating systems 120 can act to control and/or allocate resources of the one or more computing devices 110. It is to be appreciated that the claimed subject matter can be implemented with various operating systems or combinations of operating systems.

The one or more computer executable components 122 and/or the one or more other vehicle applications 124 can take advantage of the management of resources by the one or more operating systems 120 through program modules and program data also stored in the one or more memories 118. The one or more computer executable components 122 can provide various features and/or functionalities that can facilitate vehicle passenger space identification and/or contact mitigation herein. Example, other vehicle applications 124 can include, but are not limited to: a navigation application, a media player application, a phone application, a vehicle settings application, a parking assistance application, an emergency roadside assistance application, a combination thereof, and/or the like. The features and functionalities of the one or more computer executable components 122 are discussed in greater detail infra.

The one or more computing devices 110 can further include one or more interface ports 126, one or more communication units 128, and a system bus 130 that can communicatively couple the various features of the one or more computing devices 110 (e.g., the one or more interface ports 126, the one or more communication units 128, the one or more memories 118, and/or the one or more processing units 116). The one or more interface ports 126 can connect the one or more input devices 106 (and other potential devices) and the one or more other vehicle electronic systems/devices 108 to the one or more computing devices 110. For example, the one or more interface ports 126 can include, a serial port, a parallel port, a game port, a universal serial bus ("USB") and the like.

The one or more communication units 128 can include suitable hardware and/or software that can facilitate connecting one or more external devices 112 to the one or more computing devices 110 (e.g., via a wireless connection and/or a wired connection). For example, the one or more communication units 128 can be operatively coupled to the one or more external devices 112 via one or more networks 114. The one or more networks 114 can include wired and/or wireless networks, including but not limited to, a personal area network ("PAN"), a local area network ("LAN"), a cellular network, a wide area network ("WAN", e.g., the Internet), and the like. For example, the one or more external devices 112 can communicate with the one or more computing devices 110 (and vice versa) using virtually any desired wired or wireless technology, including but not limited to: wireless fidelity ("Wi-Fi"), global system for mobile communications ("GSM"), universal mobile telecommunications system ("UMTS"), worldwide interoperability for microwave access ("WiMAX"), enhanced general packet radio service (enhanced "GPRS"), fifth generation ("5G") communication system, sixth generation ("6G") communication system, third generation partnership project ("3GPP") long term evolution ("LTE"), third generation partnership project 2 ("3GPP2") ultra-mobile broadband ("UMB"), high speed packet access ("HSPA"), Zigbee and other 802.XX wireless technologies and/or legacy telecommunication technologies, near field communication ("NFC") technology, BLUETOOTH®, Session Initiation Protocol ("SIP"), ZIGBEE®, RF4CE protocol, WirelessHART protocol, 6LoWPAN (IPv6 over Low power Wireless Area Networks), Z-Wave, an ANT, an ultra-wideband ("UWB") standard protocol, and/or other proprietary and non-proprietary communication protocols. In this regard, the one or more communication units 128 can include software, hardware, or a combination of software and hardware that is configured to facilitate wired and/or wireless communication between the one or more computing devices 110 and the one or more external devices 112. While the one or more communication units 128 are shown for illustrative clarity as a separate unit that is not stored within memory 118, it is to be appreciated that one or more (software) components of the communication unit can be stored in memory 118 and include computer executable components.

The one or more external devices 112 can include any suitable computing device comprising a display and input device (e.g., a touchscreen) that can communicate with the one or more computing devices 110 comprised within the onboard vehicle system 104 and interface with the one or more computer executable components 122 (e.g., using a suitable application program interface ("API")). For example, the one or more external devices 112 can include, but are not limited to: a mobile phone, a smartphone, a tablet, a personal computer ("PC"), a digital assistant ("PDA"), a heads-up display ("HUD"), virtual reality ("VR") headset, an augmented reality ("AR") headset, or another type of wearable computing device, a desktop computer, a laptop computer, a computer tablet, a combination thereof, and the like.

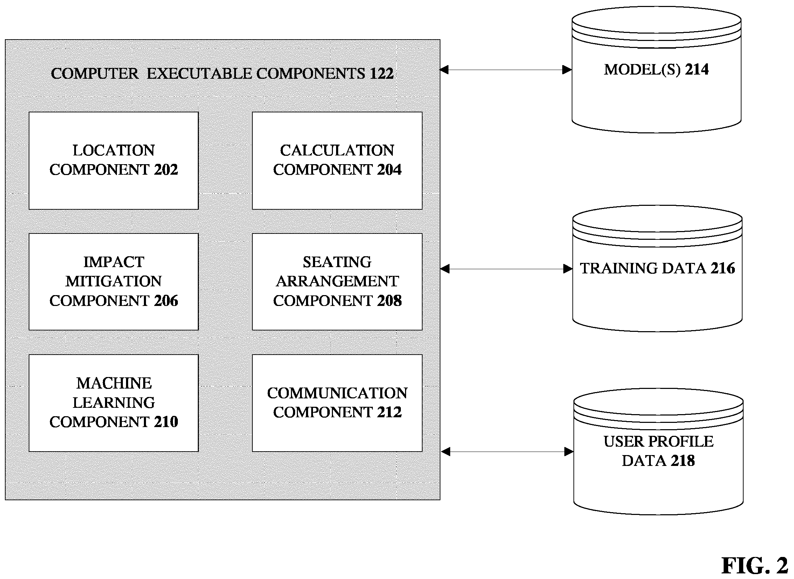

FIG. 2 illustrates a block diagram of example, non-limiting computer executable components 122 that can facilitate vehicle passenger space identification and/or contact mitigation in accordance with one or more embodiments described herein. Repetitive description of like elements employed in other embodiments described herein is omitted for sake of brevity. As shown in FIG. 2, the one or more computer executable components 122 can comprise location component 202, calculation component 204, impact mitigation component 206, seating arrangement component 208, machine learning component 210, and/or communication component 212. In various embodiments, the computer executable components can be communicatively coupled to and/or can further comprise machine learning based model(s) 214, training data 216, and/or user profile data 218 which can be stored in memory 118.

In various embodiments, the location component 202 can, using a sensor (e.g., distance sensor 302) of a vehicle (e.g., vehicle 102), determine a position (e.g., a first position) of an occupant of the vehicle and a position (e.g., a second position) of an object in the vehicle. It is noted that the object can comprise one or more of a vehicle seat, a vehicle door, a dashboard, a steering wheel, or another suitable interior component and/or portion thereof, of the vehicle 102. The location component 202 can utilize one or more distance sensors 302 in order to determine three-dimensional positions of occupants and objects in the interior space of the vehicle 102. In this regard, the location component 202 can utilize and/or integrate data from the distance sensors 302 to generate a three-dimensional digital representation of the interior of the vehicle 102 and corresponding occupants and objects. In various implementations, the distance sensors 302 can comprise one or more of a light detection and ranging (lidar) sensor, a radar sensor, an ultrasonic sensor, an infrared sensor, a laser sensor, a light emitting diode (LED) sensor, a capacitive sensor, a time of flight sensor, a hall effect sensor, or an optical sensor. In some embodiments a plurality of optical sensors or other suitable sensors can be utilized to determine or triangulate positions of occupants or objects herein.

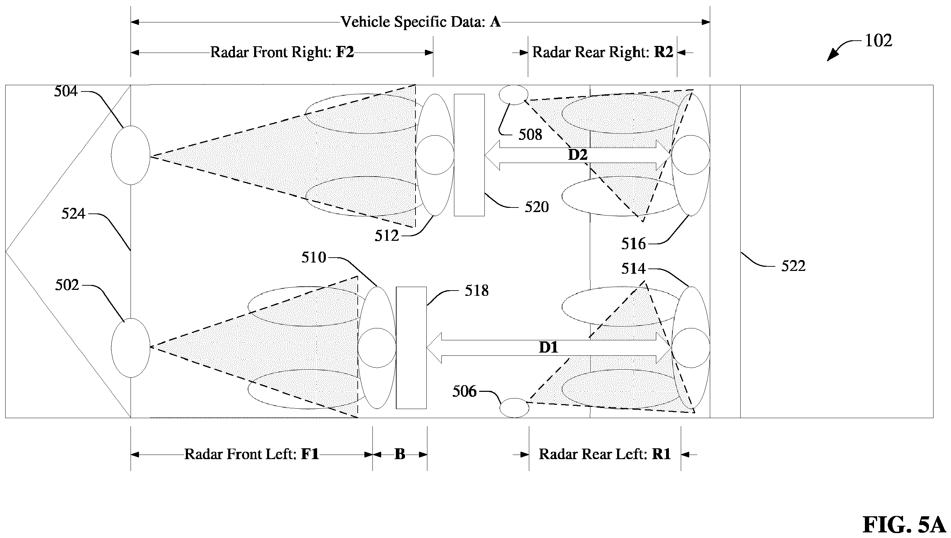

According to an embodiment, the calculation component 204 can (e.g., based on respective positions of the occupant and the object determined via the location component 202) determine a distance between an occupant herein and an object herein. In some embodiments, the distance between the occupant and the object can comprise a shortest distance between the occupant and the object (e.g., shortest linear distance between a portion of the occupant and a portion of the object). In other embodiments, the distance between the occupant and the object can comprise a distance between a defined portion (e.g., a first defined potion) the occupant (e.g., a head, leg, knee, arm, etc.) and a defined portion (e.g., a second defined portion) of the object (e.g., a seatback of a seat, headrest, etc.) With reference to FIGs. 5A. 5B, 7A, and 7B, such a distance between an occupant and an object can comprise distance D1, distance D2, or another suitable distance.

In some implementations, an occupant herein can comprise a rear seat occupant, and the object can comprise a front seat of the vehicle 102. In this regard, the location component 202 can further determine a position (e.g., a second position) of the front seat of the vehicle using one or more position sensors (e.g., seat position sensor 306) of the front seat. Such seat position sensors 306 can comprise one or more of a seat slide sensor, a seat height sensor, a seat tilt sensor, a seat recline sensor, a headrest sensor, or another suitable position sensor of a seat herein. The calculation component 204 can then utilize one or more of the position of a front seat, known dimensions of the front seat, and/or the position or size of the rear seat occupant in order to determine the distance between the rear seat occupant and the front seat (e.g., the seat in front of the rear seat occupant). In another implementation, an occupant herein can comprise a front seat occupant, and the object herein can comprise a dashboard of the vehicle or a steering wheel of the vehicle. In this regard, the calculation component 204 can determine the distance between the front seat occupant and one or more objects applicable to the front seat occupant (e.g., the steering wheel, the dashboard, a door, etc.) In various embodiments herein, an occupant can comprise a rear seat occupant of the vehicle 102 and an object can comprise a front seat of the vehicle 102. In this regard, the action determined (e.g., by the impact mitigation component 206) to mitigate the impact between the rear seat occupant and the front seat can comprise moving the front seat forward to increase the distance between the occupant and the object. In another embodiment, such an action can comprise tilting the front seat forward to increase the distance between the rear seat occupant and the front seat. In another embodiment, such an action can comprise rotating a seat (e.g., a rear seat) of the vehicle, applicable to the occupant, to increase the distance between the occupant and the object. In another embodiment, the occupant can comprise a third row seat occupant and the object can comprise a rear seat of the vehicle. In this regard, the action determined (e.g., by the impact mitigation component 206) to mitigate the impact between the third row seat occupant and the rear seat can comprise moving the rear seat forward to increase the distance between the third row seat occupant and the rear seat. In another embodiment, the action determined to mitigate the impact between an occupant and a seat can comprise adjusting tilt of the rear seat to increase the distance between the occupant and the seat.

In various embodiments, in response to the calculation component 204 determining a distance between an occupant of a vehicle 102 and an object of the vehicle, the impact mitigation component 206 can (e.g., based on the distance determined by the calculation component 204) facilitate an action determined to mitigate an impact between the occupant and the object. For example, if the calculation component 204 determines that a front seat is in close proximity to a rear seat occupant (e.g., within a defined threshold), a defined (e.g., increased) load limiting force can be applied to a seatbelt to mitigate contact between the rear seat occupant and the front seat. Such a load limiting force can be based on one or more of a variety of factors, such as predicted crash severity, rear occupant size, front seat position relative to rear occupant (e.g., front seat position and/or rear seat occupant posture), biometric data or health data applicable to the occupant, applicable pre-crash maneuvers, or other suitable factors. It is noted that the load limiting force can be determined using one or more of a variety of methods. Such methods can comprise one or more of defined lookup tables, defined algorithms, or machine learning that utilize inputs such as seat position, dashboard position, steering wheel position, door position, occupant position, biometric data (e.g., corresponding to the occupant) such as weight or body size, occupant health data, or other suitable inputs.

In some embodiments, the action determined to mitigate an impact between the occupant and the object can comprise generation and/or facilitation of a warning applicable to the distance. Such a warning can comprise a haptic alert via a steering wheel 602 of the vehicle 102, an audible alert via a speaker 318 of the vehicle 102, or a different type of warning. In this regard, the user (e.g., occupant 510 or another occupant of the vehicle 102) can provide an audible response (e.g., captured via a microphone of the vehicle 102) or can provide an input response via the infotainment device 316 (e.g., a display such as a touchscreen display) of the vehicle 102 (e.g., to acknowledge the warning, confirm a mitigation action corresponding to the warning, or dismiss the warning). In various implementations, the warning can increase in intensity over a defined period of time (e.g., via haptic vibration or sound) in response to the message not being acknowledged by the user (e.g., via the mobile device 402, infotainment device 316, or via another suitable interface). It is noted that, in various embodiments, the warning can be transmitted to/from an external device (e.g., a mobile device) and a vehicle 102 via a vehicle-to-everything (V2X) communication protocol. In various embodiments, the impact mitigation component 206 can generate a warning if, for instance, the calculation component 204 determines that position of a seat of the vehicle could impact airbag performance (e.g., impede complete airbag deployment by fully or partially blocking an airbag of the vehicle 102) based in a predicted trajectory of the respective airbag and any objects of the vehicle 102 potentially on that trajectory. Further, if an airbag is partially blocked by a seat of the vehicle 102, then seatbelt tension can be adjusted (e.g., by the seatbelt system 312) such that, in the event of an accident involving the vehicle 102, the seatbelt applies more motion stopping force to an occupant of the vehicle 102 by increasing load limiting force via the corresponding seatbelt tensioner. In this regard, it is noted that seatbelt tensioners herein (e.g., of a seatbelt system 312) can possess adjustable tension and/or slip which can be adjusted in response to instructions generated by the impact mitigation component 206. In some embodiments, permissible seatbelt tension or slip herein can be determined using machine learning based locations of seats front and rear passengers, respective distances between occupants and objects (e.g., seats, dashboards, steering wheels, doors, etc.) herein, or other suitable factors. Such machine learning can be performed using past seating locations and past occupants of other vehicles, other than the vehicle 102. Further, such machine learning can be utilized, for instance, in order to generate an impact mitigation model (e.g., of the models 214), which can be utilized by an impact mitigation component 206 herein.

In some embodiments, the impact mitigation component 206 can automatically move a seat herein (e.g., to adjust a distance between an occupant and an object herein) in response to a pre-crash detection 816, a crash detection 814, or a determined risk to an occupant based on a location of an object herein relative to the occupant. For instance, the impact mitigation component 206 can move a front seat forward to increase space for a rear occupant, move a front seat rearward to increase space for a front occupant, move a rear seat rearward to increase space for the rear occupant, move a rear seat forward to increase space for a third-row seat occupant, or otherwise move or tilt seats herein in order to mitigate or reduce the likelihood of contact between an occupant of a vehicle 102 and a corresponding object of the vehicle 102. The foregoing can occur in response to a determination (e.g., by the system 100 via one or more collision sensors 310) that a collision is imminent or currently occurring. It is noted that, when mitigating risk for a first occupant, the impact mitigation component 206 can consider risk for a second occupant (e.g., and a third occupant, fourth occupant, fifth occupant, and so on). In this regard, and according to an example, if the impact mitigation component 206 automatically moves a front seat forward to increase distance between a rear occupant and the front seat, the impact mitigation component 206 can be configured not to move the front seat into a position that would pose undue risk to the front seat occupant (e.g., too close to a dashboard or steering wheel of the vehicle 102). In this regard, the impact mitigation component 206 can be configured to move seats of the vehicle 102 to facilitate balanced safety for a plurality of occupants of the vehicle 102.

According to an embodiment, the impact mitigation component 206 can determine unsafe positions of occupants of a vehicle 102 herein using the distance sensors 302, calculation component 204, and/or location component 202. For instance, the impact mitigation component 206 can determine whether a front occupant has extremities (e.g., legs, arms, etc.) resting on the dashboard, whether a front occupant is too close to the steering wheel, whether an occupant is slouched in a seat, or other unsafe positions of occupants herein. The impact mitigation component 206 can make such a determination by comparing positions of the occupants to defined unsafe positions, or using machine learning to determine unsafe positions based on past data of other vehicles (e.g., collision data applicable to other vehicles). In this regard, the past data of other vehicles (e.g., collision data applicable to other vehicles) can be utilized as training data (e.g., training data 216). In various embodiments, the training data 216 can be utilized, via the machine learning component 210, to enable machine learning (e.g., self-supervised machine learning) of unsafe positions for occupants of vehicles herein. The impact mitigation component 206 can then generate a corresponding warning (e.g., to be conveyed via one or more output devices of the vehicle 102) or take an impact mitigation action (e.g., move a seat, adjust seatbelt tension, adjust airbag deployment, or another suitable action herein). For example, the impact mitigation component 206 can determine tightening tension in a seatbelt (e.g., of a seatbelt system 312) (e.g., in ft-lbs.) based on the distance between the occupant and the object, the weight of the occupant (e.g., according to a user profile and/or weight sensor of a vehicle seat), and/or other suitable factors. In another embodiment, such an impact mitigation action can comprise, based on the distance between the occupant and the object, adjusting airbag deployment of an airbag applicable to the occupant (e.g., of an airbag configured to contact the occupant). For example, deployment speed, force, or whether to deploy the airbag at all can be determined by the impact mitigation component 206 based on the distance between the occupant and the object, the weight of the occupant (e.g., according to a user profile and/or weight sensor of a vehicle seat), biometric data or health data applicable to the occupant, and/or other suitable factors.

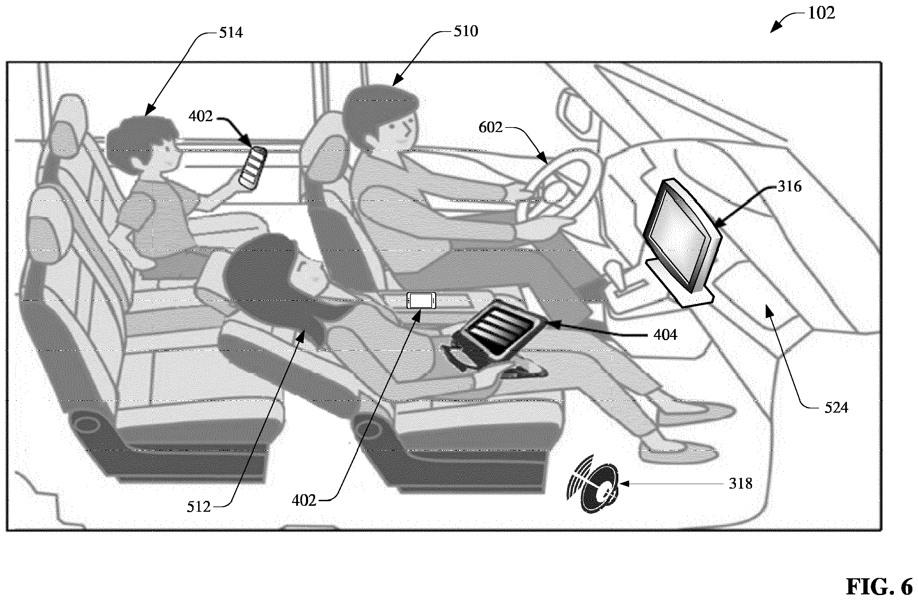

In various embodiments, the system 100 can identify mobile devices connected to the vehicle 102 and/or most recently connected to the vehicle 102. The impact mitigation component 206 can then determine the action to mitigate an impact between the occupant and the object based (at least in part) on user profile data (e.g., user profile data 218) determined via the connection of the mobile device to the vehicle 102. In various embodiments, the user profile data 218 can comprise data such as biometric data, health data, or other suitable data. For instance, an occupant that recently experienced a rib injury, or underwent chest surgery, may not be able to withstand as much force exerted via a seatbelt relative to an uninjured occupant. Such information can be part of the user profile data 218, and the impact mitigation component 206 can thus adjust seatbelt tension or slip (e.g., load limiting force) according to the biometric data or health data. In this regard, the impact mitigation component 206 can determine the action to mitigate an impact between the occupant and the object based on user profile data 218 associated with a user profile applicable to the occupant. In one or more embodiments, such user profile data 218 can be stored in memory of the vehicle 102 or system 100 or otherwise accessible by the vehicle 102 or system 100. In various implementations, a user of a mobile device 402 (and/or an occupant of the vehicle) can be registered with the system 100 and/or vehicle 102. In this regard, the user of the mobile device 402 can utilize the user interface of the mobile device 402 in order to edit aspects of a respective user profile and corresponding user profile data 218. It is noted that the mobile device 402 or other external devices can communicate with the vehicle 102 via the communication component 212 and/or communication unit 128. In further embodiments, the user profile and corresponding user profile data 218 can be edited via an infotainment device 316 of the vehicle 102 (see, e.g., FIG. 6). In this regard, a range of movement of a seat of the vehicle can be restricted (e.g., by the impact mitigation component 206) based in part on the user profile data 218. For instance, the seat and/or corresponding seat back can be restricted (e.g., by the impact mitigation component 206) from moving to/from one or more defined positions or angles.

In another embodiment, the seating arrangement component 208 can, using a seating arrangement model (e.g., of the models 214) generated using machine learning (e.g., via the machine learning component 210) applied to past seating arrangements of other occupants of other vehicles, other than occupants of the vehicle, generate a seating arrangement recommendation applicable to occupants of the vehicle, comprising the occupant. In this regard, the past seating arrangements of other occupants of other vehicles can be utilized as training data (e.g., training data 216). In various embodiments, the training data 216 can be utilized, via the machine learning component 210, to enable machine learning (e.g., self-supervised machine learning) of seating arrangements of occupants of vehicles herein and/or corresponding safety herein. Further in this regard, the seating arrangement recommendation can be determined (e.g., via the seating arrangement component 208 and/or impact mitigation component 206) to mitigate an impact between one or more occupants of the vehicle 102 and the object herein of the vehicle 102. It is noted that the seating arrangement recommendation can be configured to optimize safety of all occupants of the vehicle 102 by optimizing seating positions all occupants of the vehicle 102. In some embodiments, the optimization of seating positions of occupants of the vehicle 102 can be based on user profile data 218 associated with respective user profiles applicable to occupants of the vehicle 102. For instance, the seating arrangement component 208 can analyze user profile data 218, biometric data (e.g., weight of occupants or sizes of occupants determined via sensors of the vehicle 102), health data, and/or known information about the vehicle 102 (e.g., cabin size, seat thickness, steering wheel location, dashboard location, etc. in order to determine optimal seating locations of occupants of the vehicle 102. Such optimal seating locations can comprise placement of occupants in respective seats of the vehicle 102 and positions of the respective seats. In further implementations, the seating arrangement recommendation can be configured to optimize leg spacing of occupants of the vehicle by optimizing occupant placement and/or respective seat positions.

Various embodiments herein can employ artificial-intelligence or machine learning systems and techniques to facilitate learning user behavior, context-based scenarios, preferences, etc. in order to facilitate taking automated action with high degrees of confidence. Utility-based analysis can be utilized to factor benefit of taking an action against cost of taking an incorrect action. Probabilistic or statistical-based analyses can be employed in connection with the foregoing and/or the following.

It is noted that systems and/or associated controllers, servers, or machine learning components herein can comprise artificial intelligence component(s) which can employ an artificial intelligence (A.I.) model and/or machine learning (M.L.) or an M.L. model that can learn to perform the above or below described functions (e.g., via training using historical training data and/or feedback data).

In some embodiments, machine learning component 210 can comprise an A.I. and/or M.L. model that can be trained (e.g., via supervised and/or unsupervised techniques) to perform the above or below-described functions using historical training data comprising various context conditions that correspond to various augmented network optimization operations. In this example, such an A.I. and/or M.L. model can further learn (e.g., via supervised and/or unsupervised techniques) to perform the above or below-described functions using training data comprising feedback data, where such feedback data can be collected and/or stored (e.g., in memory) by the machine learning component 210. In this example, such feedback data can comprise the various instructions described above/below that can be input, for instance, to a system herein, over time in response to observed/stored context-based information.

A.I./M.L. components herein can initiate an operation(s) associated with a based on a defined level of confidence determined using information (e.g., feedback data). For example, based on learning to perform such functions described above using feedback data, performance information, and/or past performance information herein, a machine learning component 210 herein can initiate an operation associated with determining various thresholds herein (e.g., a motion pattern thresholds, input pattern thresholds, similarity thresholds, authentication signal thresholds, audio frequency thresholds, or other suitable thresholds).

In an embodiment, the machine learning component 210 can perform a utility-based analysis that factors cost of initiating the above-described operations versus benefit. In this embodiment, the machine learning component 210 can use one or more additional context conditions to determine various thresholds herein.

To facilitate the above-described functions, a machine learning component 210 herein can perform classifications, correlations, inferences, and/or expressions associated with principles of artificial intelligence. For instance, the machine learning component 210 can employ an automatic classification system and/or an automatic classification. In one example, the machine learning component 210 can employ a probabilistic and/or statistical-based analysis (e.g., factoring into the analysis utilities and costs) to learn and/or generate inferences. The machine learning component 210 can employ any suitable machine-learning based techniques, statistical-based techniques and/or probabilistic-based techniques. For example, the machine learning component 210 can employ expert systems, fuzzy logic, support vector machines (SVMs), Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, and/or the like. In another example, the machine learning component 210 can perform a set of machine-learning computations. For instance, the machine learning component 210 can perform a set of clustering machine learning computations, a set of logistic regression machine learning computations, a set of decision tree machine learning computations, a set of random forest machine learning computations, a set of regression tree machine learning computations, a set of least square machine learning computations, a set of instance-based machine learning computations, a set of regression machine learning computations, a set of support vector regression machine learning computations, a set of k-means machine learning computations, a set of spectral clustering machine learning computations, a set of rule learning machine learning computations, a set of Bayesian machine learning computations, a set of deep Boltzmann machine computations, a set of deep belief network computations, and/or a set of different machine learning computations.

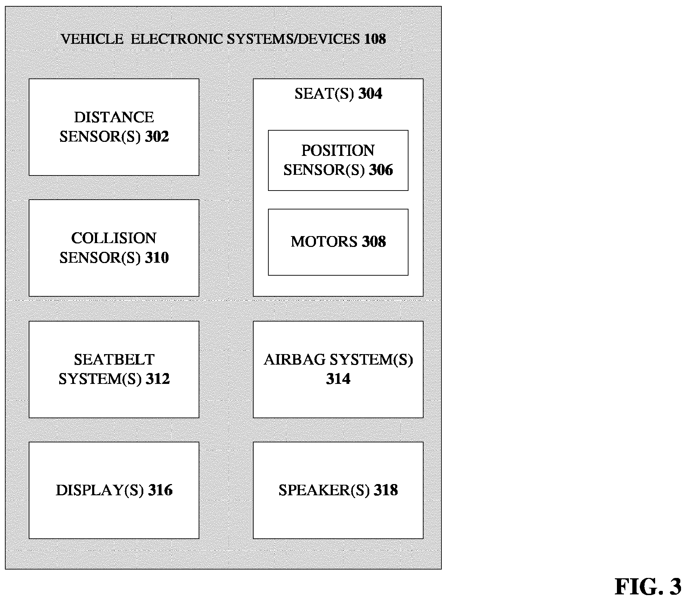

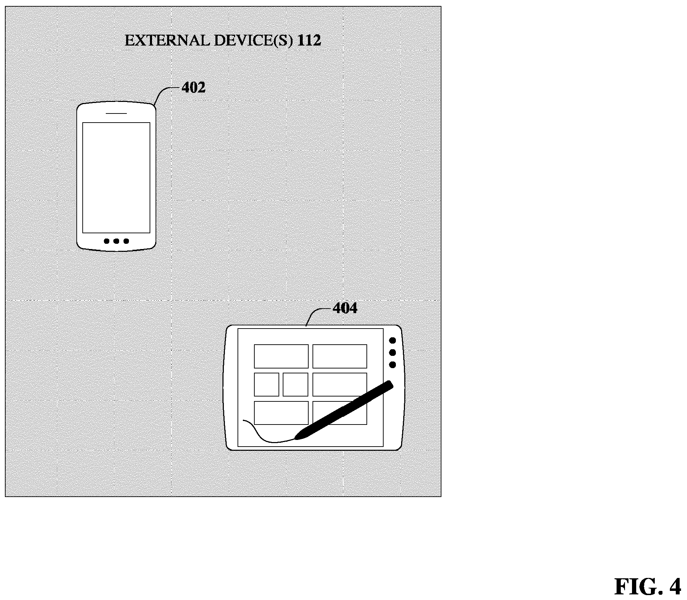

FIG. 3 illustrates a block diagram of example, non-limiting vehicle electronic systems/devices 108 in accordance with one or more embodiments described herein. Repetitive description of like elements employed in other embodiments described herein is omitted for sake of brevity. In various embodiments, the vehicle electronic systems/devices 108 can comprise one or more of distance sensors 302, seats 304 (e.g., front seats, rear seats, third row seats, or other suitable seats of the vehicle 102), collision sensors 310 (e.g., sensors external or internal to the vehicle 102 that are arranged to detect collisions or potential collisions, such as one or more of a lidar sensors, radar sensors, ultrasonic sensors, infrared sensors, laser sensors, LED sensors, capacitive sensors, time of flight sensors, hall effect sensors, optical sensors, or other suitable collision sensors), seatbelt systems 312 (e.g., seatbelts, seatbelt tensioners, seatbelt retractors, etc.), airbag systems 314, infotainment devices 316 (e.g., touchscreen displays), and/or speakers 318. In one or more embodiments, the seats 304 can comprise one or more respective seat position sensors 306 (e.g., to determine a seat bottom position, seat back position, seat tilt or recline angle, headrest position, etc.) of the seat 304 and one or more motors 308 to adjust respective positions, tilts, angles, etc. of the respective seats 304. FIG. 4 illustrates a block diagram of example, non-limiting external devices 112 in accordance with one or more embodiments described herein. In this regard, the external devices 112 can comprise mobile device 402 (e.g., a smartphone), tablet 404, or other suitable external devices.

FIGs. 5A-5B illustrate block diagrams of exemplary systems in accordance with one or more embodiments described herein. As depicted in FIG. 5A, the vehicle 102 can comprise one or more of sensor 502, sensor 504, sensor 506, sensor 508, occupant 510, occupant 512, occupant 514, occupant 516, seat 518, seat 520, seat 522, and/or dashboard 524. It is noted that sensor 502, sensor 504, sensor 506, and/or sensor 508 can comprise the distance sensor 302 (e.g., a radar sensor, a lidar sensor, or another type of distance sensor 302 described herein). In various embodiments, the sensor 502 can measure (e.g., via the location component 202) a position of the occupant 510, which can be utilized (e.g., by the calculation component 204) to determine the distance between the dashboard 524 and the occupant 510. The sensor 504 can measure (e.g., via the location component 202) a position of the occupant 512, which can be utilized (e.g., by the calculation component 204) to determine distance between the dashboard 524 and the occupant 512. The sensor 506 can measure (e.g., via the location component 202) a position of the occupant 514, which can be utilized (e.g., by the calculation component 204) to determine the distance to the occupant 514. Further, the sensor 508 can measure (e.g., via the location component 202) a position of the occupant 516, which can be utilized (e.g., by the calculation component 204) to determine the distance to the occupant 516. Such distances can vary depending on, for instance, seating position or occupant size.

In FIG. 5A, distances D1 and D2 can be determined by the following respective equations:

$$D1 = A\text{-}F1\text{-}B \qquad\qquad \text{Equation (1)}$$

$$D2 = A\text{-}F2\text{-}B \qquad\qquad \text{Equation (2)}$$

in which A comprises vehicle specific data (e.g., distance between front sensors 502 or 504 and rear seat 522, or distance between dashboard 524 and rear seat 522), B comprises vehicle specific data (e.g., based on seat thickness), F1 comprises sensor front left (e.g., sensor 502) distance, and F2 comprises sensor front right (e.g., sensor 504) distance. Rear sensors (e.g., sensor 506 and/or sensor 508) can be utilized to determine out of position (OOP) situations of occupants utilizing the rear seat(s) 522. It is noted that R1 comprises sensor rear left (e.g., sensor 506) distance, and R2 comprises sensor rear right (e.g., sensor 508) distance. The OOP distance can be subtracted from the available distance D1 or D2, respectively. In various embodiments, OOP distances can be determined using the following equations:

$$OOP1 = (\text{vehicle specific data for normally seated rear occupant}) - R1 \qquad \text{Equation (3)}$$

$$OOP2 = (\text{vehicle specific data for normally seated rear occupant}) - R2 \qquad \text{Equation (4)}$$

in which R1 comprises sensor rear left (e.g., sensor 506) distance and R2 comprises sensor rear right (e.g., sensor 508) distance.

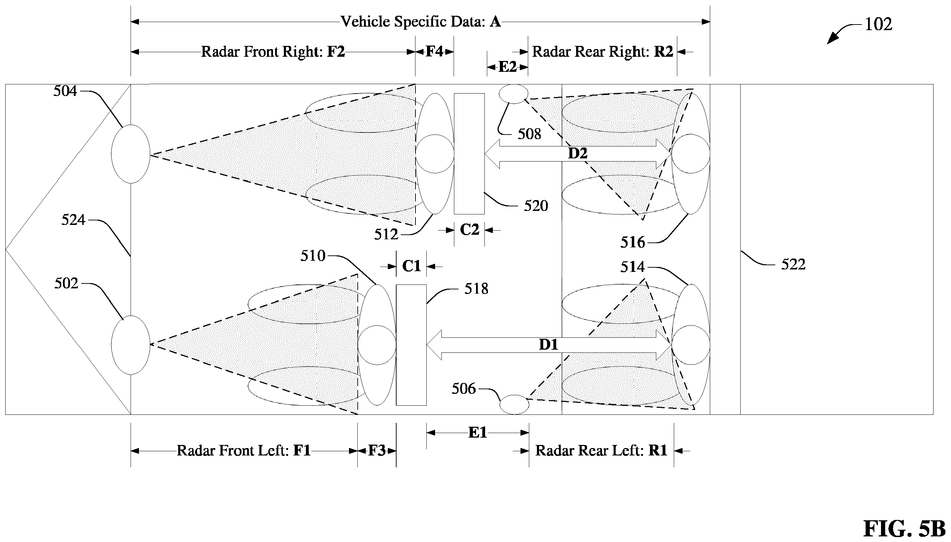

In FIG. 5B distances D1 and D2 can be determined by the following respective equations:

$$D1 = E1 + R1 \qquad\qquad \text{Equation (5)}$$

$$D2 = E2 + R2 \qquad\qquad \text{Equation (6)}$$

in which E1 is determined using one or more position sensors of the seat 518, and R1 is determined using the sensor 506 and represents distance to the occupant 514. Further, E2 is determined using one or more position sensors of the seat 520, and R2 is determined using sensor 508 and represents the distance to the occupant 516. In FIG. 5B, F1 comprises distance between the sensor 502 or dashboard 524 and the occupant 510, F2 comprises distance between the sensor 504 or dashboard 524 and the occupant 512, F3 comprises measured size or thickness of occupant 510 (e.g., determined using sensor 502 and/or user profile data 218 corresponding to the occupant 510), F4 comprises measured size or thickness of occupant 512 (e.g., determined using sensor 504 and/or user profile data 218 corresponding to the occupant 512), C1 comprises known thickness of the seat 518, and C2 comprises known thickness of the seat 520.

FIG. 6 illustrates a diagram of an example, non-limiting vehicle 102 interior in accordance with one or more embodiments described herein. Repetitive description of like elements employed in other embodiments described herein is omitted for sake of brevity. As shown in FIG. 6, an operator (e.g., an occupant 510) can steer the vehicle 102 using steering wheel 602. Occupant 510 can be associated with (e.g., an owner of and/or registered with) mobile device 402. Occupant 512 can comprise a passenger (e.g., a front seat passenger) of the vehicle 102 and/or can be associated with tablet 404. Further, occupant 514 can comprise a rear seat passenger of the vehicle 102. Further, each occupant can comprise a respective user profile registered with the system 100 and/or vehicle 102. In various embodiments, the vehicle 102 can comprise infotainment device 316 and/or speaker 318, which can be utilized by one or more users to interface with the vehicle 102. The infotainment device 316 can comprise a touch screen on which a user can interface with the system 100. Further, the speaker 318 can broadcast audible alerts or warnings (e.g., generated using the communication component 212 and/or communication unit 128).

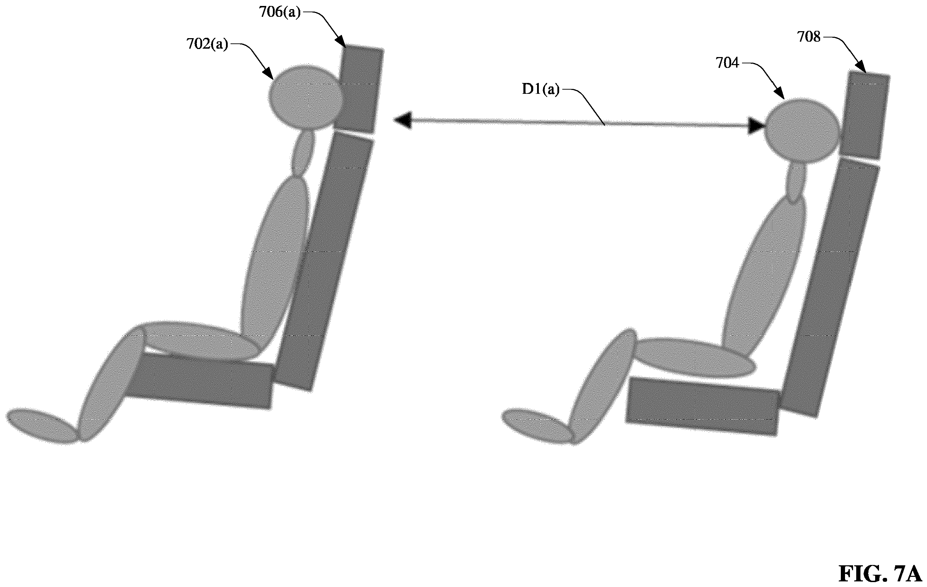

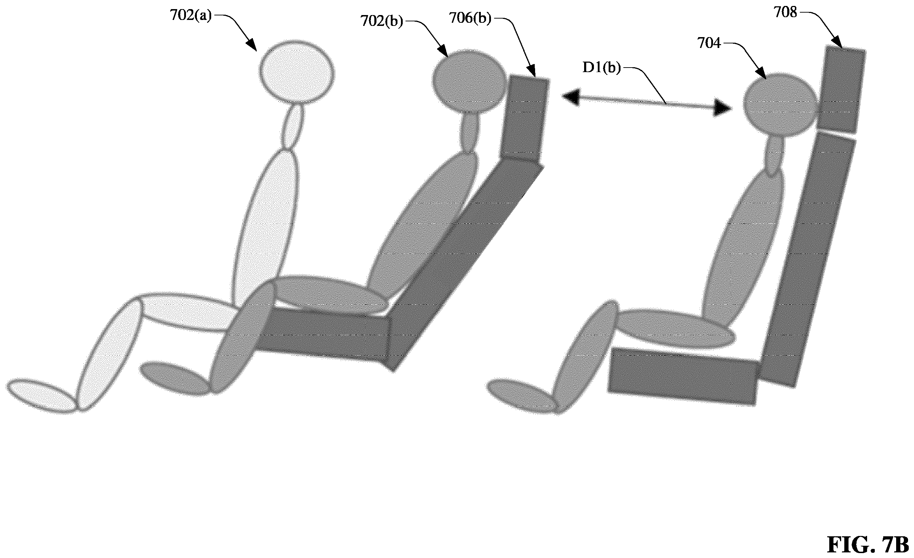

FIGs. 7A-7B illustrates diagrams of example, non-limiting vehicle scenarios in accordance with one or more embodiments described herein. In FIG. 7A, a front seat occupant 702 can be seated in front seat 706 and a rear seat occupant 704 can be seated in rear seat 708. In FIG. 7A positions 702(a) and 706(a) of the front seat occupant 702 and front seat 706, respectively, can result in distance D1(a) between the front seat 706 and the rear seat occupant 704. In this regard, D1(a) can be relatively large as compared to distance D1(b) of FIG. 7B, in which the front seat occupant 702 is moved rearward and reclined toward the rear occupant 704, resulting in positions 702(b) and 706(b) of the front seat occupant 702. It is noted that seatbelt restraint settings applicable to the rear seat occupant 704 can differ depending on whether the front seat 706 is in position 706(a) or 706(b). For instance, the impact mitigation component 206 can adjust seatbelt tension or slip herein (e.g., via the seatbelt system 312) based on the distance D1 (e.g., determined via the calculation component 204) between the rear occupant 704 and the front seat 706.

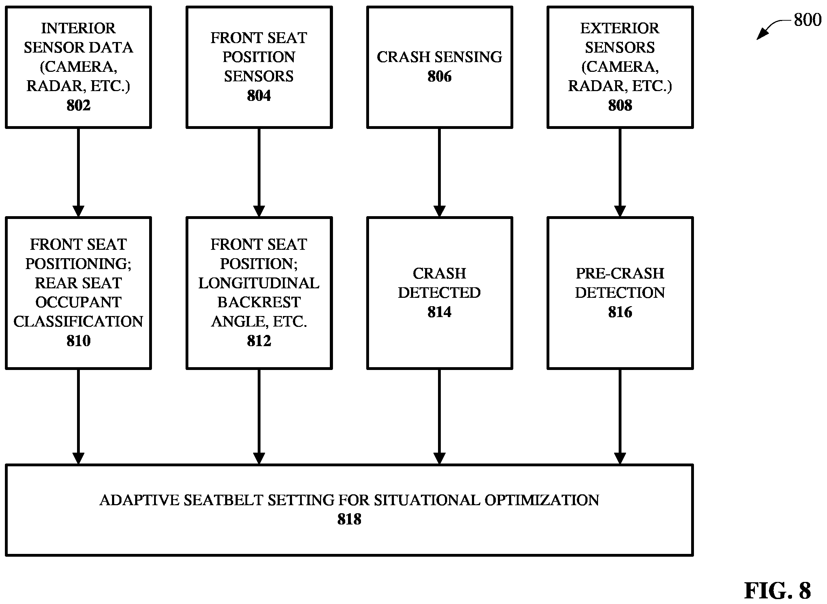

FIG. 8 illustrates a flow diagram for a process 800 associated with vehicle passenger space contact mitigation in accordance with one or more embodiments described herein. At 802, interior sensor data (e.g., via an optical sensor, lidar, radar, etc. of a distance sensor 302) can be captured (e.g., via the location component 202). Using the interior sensor data, front seat position and/or rear seat occupant classification can be facilitated (e.g., via the calculation component 204) at 810. At 804, front seat position sensors (seat position sensors 306) can be utilized (e.g., via the location component 202) to determine a position of a vehicle seat herein (e.g., seat bottom position, seat bottom tilt, seat back tilt, headrest position or tilt, etc.) Using the front seat position sensors, the front seat position, longitudinal backrest angle, etc. can be determined (e.g., via the location component 202) at 812. At 806, crashing sensing can be facilitated (e.g., via collision sensors 310). Using such sensors, a crash or an imminent crash can be detected at 814 (e.g., via the impact mitigation component 206). At 808, exterior sensors (camera, radar, etc.) of the vehicle 102 can be utilized (e.g., via the impact mitigation component 206) for pre-crash detection at 816. Data from steps 810, 812, 814, and/or 816 can be utilized (e.g., via the impact mitigation component 206) in adaptive seatbelt setting (e.g., load limiting force of a seatbelt herein) for situational optimization at 818, as described herein.

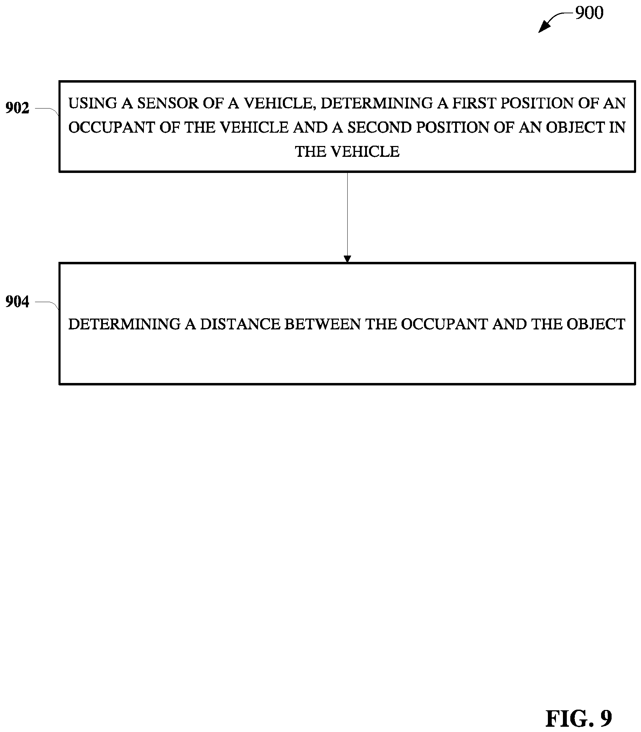

FIG. 9 illustrates a block flow diagram for a process 900 associated vehicle passenger space identification in accordance with one or more embodiments described herein. At 902, the process 900 can comprise, using a sensor (e.g., distance sensor 302) of a vehicle (e.g., vehicle 102), determining (e.g., via location component 202) a first position of an occupant of the vehicle and a second position of an object in the vehicle. At 904, the process 900 can comprise determining (e.g., via calculation component 204) a distance (e.g., D1, D2, etc.) between the occupant and the object.

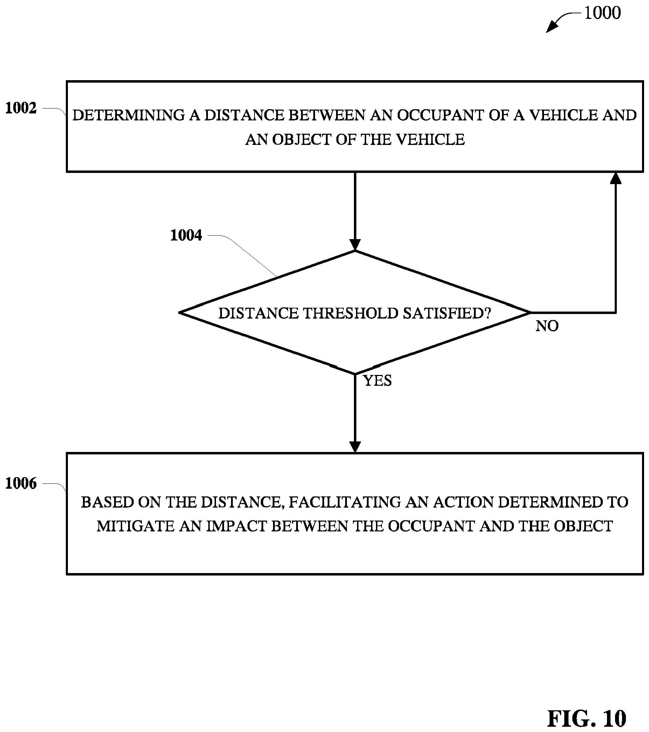

FIG. 10 illustrates a block flow diagram for a process 1000 associated with vehicle passenger space contact mitigation in accordance with one or more embodiments described herein. At 1002, the process 1000 can comprise determining (e.g., via calculation component 204) a distance (e.g., D1, D2, etc.) between an occupant of a vehicle (e.g., vehicle 102) and an object of the vehicle. At 1004, if a defined distance threshold is satisfied (e.g., as determined via the calculation component 204), the process can proceed to 1006. Otherwise, the process can return to 1002. At 1006, the process 1000 can comprise, based on the distance, facilitating (e.g., via impact mitigation component 206) an action determined to mitigate an impact between the occupant and the object.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH®, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE®, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH® low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processing unit 116 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processing unit 116) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

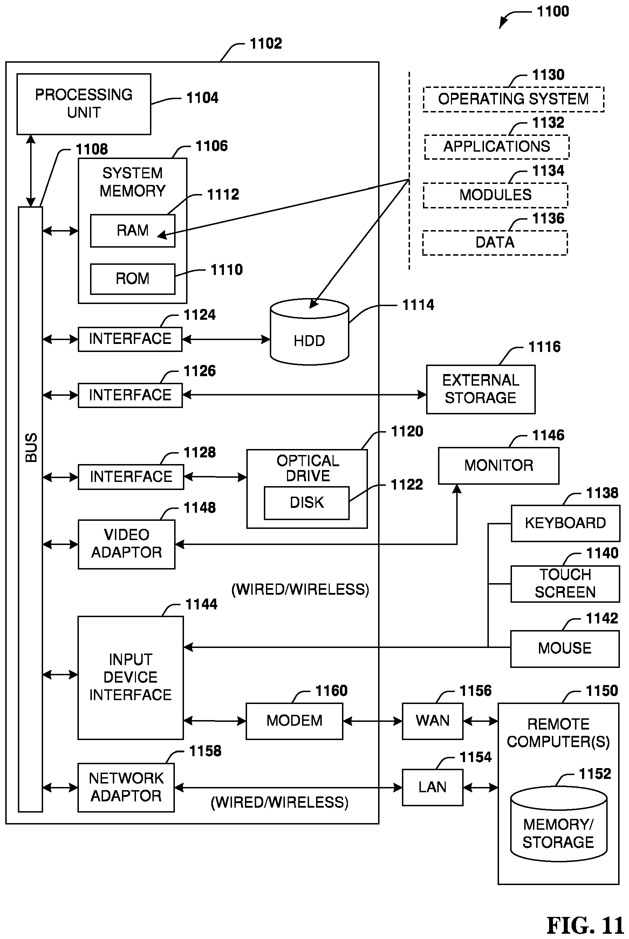

In order to provide additional context for various embodiments described herein, FIG. 11 and the following discussion are intended to provide a brief, general description of a suitable computing environment 1100 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 11, the example environment 1100 for implementing various embodiments of the aspects described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors, field-programmable gate array, AI accelerator application-specific integrated circuit, or other suitable processors. Dual microprocessors and other multi-processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a high-speed RAM such as static RAM for caching data. It is noted that unified Extensible Firmware Interface(s) can be utilized herein.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and an optical disk drive 1120 (e.g., which can read or write from a disc 1122 such as a CD-ROM disc, a DVD, a BD, etc.). While the internal HDD 1114 is illustrated as located within the computer 1102, the internal HDD 1114 can also be configured for external use in a suitable chassis (not shown). Additionally, while not shown in environment 1100, a solid-state drive (SSD) could be used in addition to, or in place of, an HDD 1114. The HDD 1114, external storage device(s) 1116 and optical disk drive 1120 can be connected to the system bus 1108 by an HDD interface 1124, an external storage interface 1126 and an optical drive interface 1128, respectively. The interface 1124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the .NET framework, for applications 1132. Runtime environments are consistent execution environments that allow applications 1132 to run on any operating system that includes the runtime environment. Similarly, operating system 1130 can support containers, and applications 1132 can be in the form of containers, which are lightweight, standalone, executable packages of software that include, e.g., code, runtime, system tools, system libraries and settings for an application.

Further, computer 1102 can be enabled with a security module, such as a trusted processing module (TPM). For instance, with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen 1140, and a pointing device, such as a mouse 1142. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 1394 serial port, a game port, a USB port, an IR interface, a BLUETOOTH® interface, etc.

A monitor 1146 or other type of display device can also be connected to the system bus 1108 via an interface, such as a video adapter 1148. In addition to the monitor 1146, a computer typically includes other peripheral output devices (not shown), such as speakers, printers, etc.

The computer 1102 can operate in a networked environment using logical connections via wired and/or wireless communications to one or more remote computers, such as a remote computer(s) 1150. The remote computer(s) 1150 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1152 is illustrated. The logical connections depicted include wired/wireless connectivity to a local area network (LAN) 1154 and/or larger networks, e.g., a wide area network (WAN) 1156. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1154 through a wired and/or wireless communication network interface or adapter 1158. The adapter 1158 can facilitate wired or wireless communication to the LAN 1154, which can also include a wireless access point (AP) disposed thereon for communicating with the adapter 1158 in a wireless mode.

When used in a WAN networking environment, the computer 1102 can include a modem 1160 or can be connected to a communications server on the WAN 1156 via other means for establishing communications over the WAN 1156, such as by way of the Internet. The modem 1160, which can be internal or external and a wired or wireless device, can be connected to the system bus 1108 via the input device interface 1144. In a networked environment, program modules depicted relative to the computer 1102 or portions thereof, can be stored in the remote memory/storage device 1152. It will be appreciated that the network connections shown are examples and other means of establishing a communications link between the computers can be used.

When used in either a LAN or WAN networking environment, the computer 1102 can access cloud storage systems or other network-based storage systems in addition to, or in place of, external storage devices 1116 as described above. Generally, a connection between the computer 1102 and a cloud storage system can be established over a LAN 1154 or WAN 1156 e.g., by the adapter 1158 or modem 1160, respectively. Upon connecting the computer 1102 to an associated cloud storage system, the external storage interface 1126 can, with the aid of the adapter 1158 and/or modem 1160, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH® wireless technologies. Thus, the communication can be a predefined structure as with a conventional network or simply an ad hoc communication between at least two devices.

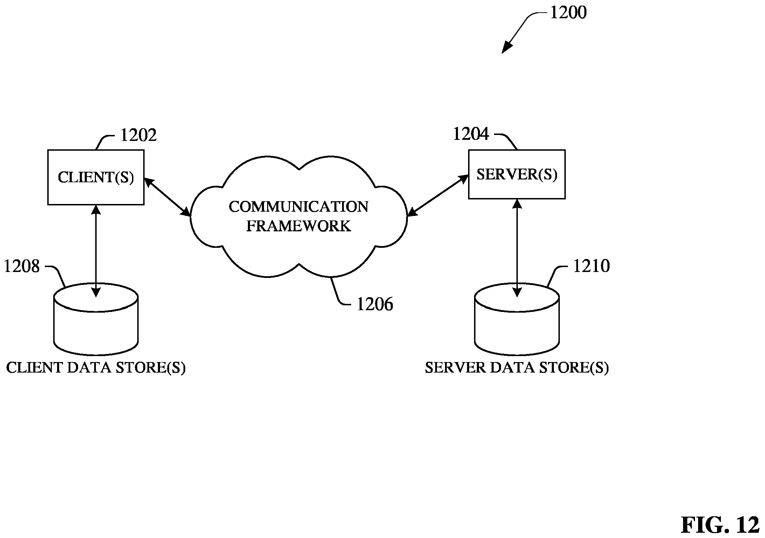

Referring now to FIG. 12, there is illustrated a schematic block diagram of a computing environment 1200 in accordance with this specification. The system 1200 includes one or more client(s) 1202, (e.g., computers, smart phones, tablets, cameras, PDA's). The client(s) 1202 can be hardware and/or software (e.g., threads, processes, computing devices). The client(s) 1202 can house cookie(s) and/or associated contextual information by employing the specification, for example.

The system 1200 also includes one or more server(s) 1204. The server(s) 1204 can also be hardware or hardware in combination with software (e.g., threads, processes, computing devices). The servers 1204 can house threads to perform transformations of media items by employing aspects of this disclosure, for example. One possible communication between a client 1202 and a server 1204 can be in the form of a data packet adapted to be transmitted between two or more computer processes wherein data packets may include coded analyzed headspaces and/or input. The data packet can include a cookie and/or associated contextual information, for example. The system 1200 includes a communication framework 1206 (e.g., a global communication network such as the Internet) that can be employed to facilitate communications between the client(s) 1202 and the server(s) 1204.

Communications can be facilitated via a wired (including optical fiber) and/or wireless technology. The client(s) 1202 are operatively connected to one or more client data store(s) 1208 that can be employed to store information local to the client(s) 1202 (e.g., cookie(s) and/or associated contextual information). Similarly, the server(s) 1204 are operatively connected to one or more server data store(s) 1210 that can be employed to store information local to the servers 1204. Further, the client(s) 1202 can be operatively connected to one or more server data store(s) 1210.

In one exemplary implementation, a client 1202 can transfer an encoded file, (e.g., encoded media item), to server 1204. Server 1204 can store the file, decode the file, or transmit the file to another client 1202. It is noted that a client 1202 can also transfer uncompressed files to a server 1204 and server 1204 can compress the file and/or transform the file in accordance with this disclosure. Likewise, server 1204 can encode information and transmit the information via communication framework 1206 to one or more clients 1202.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:

1. A system, comprising:

   a memory that stores computer executable components; and
   a processor that executes the computer executable components stored in the memory, wherein the computer executable components comprise:

      a location component that, using a sensor of a vehicle, determines a first position of an occupant of the vehicle and a second position of an object in the vehicle; and
      a calculation component that determines a distance between the occupant and the object.

2. The system of any preceding clause, wherein the sensor comprises a distance sensor.
3. The system of any preceding clause, wherein the distance sensor comprises a light detection and ranging sensor, a radar sensor, an ultrasonic sensor, an infrared sensor, a laser sensor, a light emitting diode sensor, a capacitive sensor, a time of flight sensor, a hall effect sensor, or an optical sensor.
4. The system of any preceding clause, wherein the distance between the occupant and the object comprises a shortest distance between the occupant and the object.
5. The system of any preceding clause, wherein the distance between the occupant and the object comprises a distance between a first defined portion, the occupant and a second defined portion of the object.
6. The system of any preceding clause, wherein the occupant comprises a rear seat occupant, and wherein the object comprises a front seat of the vehicle.
7. The system of any preceding clause, wherein the location component further determines the second position of the front seat of the vehicle using one or more position sensors of the front seat.
8. The system of any preceding clause, wherein the one or more position sensors of the front seat comprises a seat slide sensor, a seat height sensor, a seat tilt sensor, a seat recline sensor, or a headrest sensor.
9. The system of any preceding clause, wherein the occupant comprises a front seat occupant, and wherein the object comprises a dashboard of the vehicle.
10. The system of any preceding clause, wherein the occupant comprises a front seat occupant, and wherein the object comprises a steering wheel of the vehicle.
11. The system of clause 1 above with any set of combinations of the systems 2-10 above.
12. A non-transitory machine-readable medium, comprising executable instructions that, when executed by a processor, facilitate performance of operations, comprising:

   using a sensor of a vehicle, determining a first position of an occupant of the vehicle and a second position of an object in the vehicle; and
   determining a distance between the occupant and the object.

13. The non-transitory machine-readable medium of any preceding clause, wherein the occupant comprises a rear seat occupant, and wherein the object comprises a front seat of the vehicle.

14. The non-transitory machine-readable medium of any preceding clause, wherein the occupant comprises a front seat occupant, and wherein the object comprises a dashboard of the vehicle.

15. The non-transitory machine-readable medium of any preceding clause, wherein the sensor comprises a distance sensor.

16. The non-transitory machine-readable medium of any preceding clause, wherein the distance sensor comprises a light detection and ranging sensor, a radar sensor, an ultrasonic sensor, an infrared sensor, a laser sensor, a light emitting diode sensor, a capacitive sensor, a time of flight sensor, a hall effect sensor, or an optical sensor.

17. The non-transitory machine-readable medium of any preceding clause, wherein the distance between the occupant and the object comprises a shortest distance between the occupant and the object.

18. The non-transitory machine-readable medium of any preceding clause, wherein the distance between the occupant and the object comprises a distance between a first defined portion the occupant and a second defined portion of the object.

19. The non-transitory machine-readable medium of clause 12 above with any set of combinations of the non-transitory machine-readable mediums of clauses 13-18 above.

20. A method, comprising:

using a sensor of a vehicle, determining, by a system comprising a processor, a first position of an occupant of the vehicle and a second position of an object in the vehicle; and
determining, by the system, a distance between the occupant and the object.

21. The method of any preceding clause, wherein the occupant comprises a rear seat occupant, and wherein the object comprises a front seat of the vehicle.

22. The method of any preceding clause, wherein the occupant comprises a front seat occupant, and wherein the object comprises a dashboard of the vehicle or a steering wheel of the vehicle.

23. The method of clause 20 above with any set of combinations of the methods of clauses 21-22 above.

24. A system, comprising:

a memory that stores computer executable components; and
a processor that executes the computer executable components stored in the memory, wherein the computer executable components comprise:

a calculation component that determines a distance between an occupant of a vehicle and an object of the vehicle; and
an impact mitigation component that, based on the distance, facilitates an action determined to mitigate an impact between the occupant and the object.

25. The system of any preceding clause, wherein the occupant comprises a rear seat occupant and the object comprises a front seat of the vehicle, and wherein the action determined to mitigate the impact between the occupant and the object comprises moving the front seat forward to increase the distance between the occupant and the object.

26. The system of any preceding clause, wherein the occupant comprises a rear seat occupant and the object comprises a front seat of the vehicle, and wherein the action determined to mitigate the impact between the occupant and the object comprises tilting the front seat to increase the distance between the occupant and the object.

27. The system of any preceding clause, wherein the occupant comprises a rear seat occupant and the object comprises a front seat of the vehicle, and wherein the action determined to mitigate the impact between the occupant and the object comprises rotating a rear seat of the vehicle, applicable to the occupant, to increase the distance between the occupant and the object.

28. The system of any preceding clause, wherein the action determined to mitigate the impact between the occupant and the object comprises, based on the distance between the occupant and the object, adjusting a seatbelt tension applicable to the occupant.

29. The system of any preceding clause, wherein the action determined to mitigate the impact between the occupant and the object comprises, based on the distance between the occupant and the object, adjusting airbag deployment of an airbag applicable to the occupant.

30. The system of any preceding clause, wherein the impact mitigation component determines the action determined to mitigate an impact between the occupant and the object based on user profile data associated with a user profile applicable to the occupant.

31. The system of any preceding clause, wherein a range of movement of a seat of the vehicle is restricted based on the user profile data.

32. The system of any preceding clause, wherein the computer executable components further comprise:

a seating arrangement component that, using a seating arrangement model generated using machine learning applied to past seating arrangements of other occupants of other vehicles, other than occupants of the vehicle, generates a seating arrangement recommendation applicable to occupants of the vehicle, comprising the occupant, wherein the seating arrangement recommendation is determined to mitigate an impact between the occupant and the object.

33. The system of any preceding clause, wherein the seating arrangement component further generates the seating arrangement recommendation based on user profile data associated with a user profile applicable to the occupant.

34. The system of any preceding clause, wherein the seating arrangement recommendation optimizes leg spacing of occupants of the vehicle, comprising the occupant.

35. The system of clause 24 above with any set of combinations of the systems 25-34 above.

36. A non-transitory machine-readable medium, comprising executable instructions that, when executed by a processor, facilitate performance of operations, comprising:

determining a distance between an occupant of a vehicle and an object of the vehicle; and
based on the distance, facilitating an action determined to mitigate an impact between the occupant and the object.

37. The non-transitory machine-readable medium of any preceding clause, wherein the occupant comprises a third row seat occupant and the object comprises a rear seat of the vehicle, and wherein the action determined to mitigate the impact between the occupant and the object comprises moving the rear seat forward to increase the distance between the occupant and the object.

38. The non-transitory machine-readable medium of any preceding clause, wherein the occupant comprises a third row seat occupant and the object comprises a rear seat of the vehicle, and wherein the action determined to mitigate the impact between the occupant and the object comprises tilting the rear seat to increase the distance between the occupant and the object.

39. The non-transitory machine-readable medium of any preceding clause, wherein the action determined to mitigate the impact between the occupant and the object comprises, based on the distance between the occupant and the object, adjusting a seatbelt tension applicable to the occupant.

40. The non-transitory machine-readable medium of any preceding clause, wherein the action determined to mitigate the impact between the occupant and the object comprises, based on the distance between the occupant and the object, adjusting airbag deployment of an airbag applicable to the occupant.

41. The non-transitory machine-readable medium of any preceding clause, wherein the action determined to mitigate an impact between the occupant and the object is determined based on user profile data associated with a user profile applicable to the occupant.

42. The non-transitory machine-readable medium of any preceding clause, wherein a range of movement of a seat of the vehicle is restricted based on the user profile data.

43. The non-transitory machine-readable medium of clause 36 above with any set of combinations of the non-transitory machine-readable mediums of clauses 37-42 above.

44. A method, comprising:

determining, by a system comprising a processor, a distance between an occupant of a vehicle and an object of the vehicle; and
based on the distance, facilitating, by the system, an action determined to mitigate an impact between the occupant and the object.

45. The method of any preceding clause, further comprising:
using a seating arrangement model generated using machine learning applied to past seating arrangements of other occupants of other vehicles, other than occupants of the vehicle, generating, by the system, a seating arrangement recommendation applicable to occupants of the vehicle, comprising the occupant, wherein the seating arrangement recommendation is determined to mitigate an impact between the occupant and the object.

## Claims

1. A system, comprising:

a memory that stores computer executable components; and
a processor that executes the computer executable components stored in the memory, wherein the computer executable components comprise:

a calculation component that determines a distance between an occupant of a vehicle and an object of the vehicle; and
an impact mitigation component that, based on the distance, facilitates an action determined to mitigate an impact between the occupant and the object.

2. The system of claim 1, wherein the occupant comprises a rear seat occupant and the object comprises a front seat of the vehicle, and wherein the action determined to mitigate the impact between the occupant and the object comprises moving the front seat forward to increase the distance between the occupant and the object.

3. The system of claim 1, wherein the occupant comprises a rear seat occupant and the object comprises a front seat of the vehicle, and wherein the action determined to mitigate the impact between the occupant and the object comprises tilting the front seat to increase the distance between the occupant and the object.

4. The system of claim 1, wherein the occupant comprises a rear seat occupant and the object comprises a front seat of the vehicle, and wherein the action determined to mitigate the impact between the occupant and the object comprises rotating a rear seat of the vehicle, applicable to the occupant, to increase the distance between the occupant and the object.

5. The system of claim 1, wherein the action determined to mitigate the impact between the occupant and the object comprises, based on the distance between the occupant and the object, adjusting a seatbelt tension applicable to the occupant or adjusting airbag deployment of an airbag applicable to the occupant.

6. The system of claim 1, wherein the impact mitigation component determines the action determined to mitigate an impact between the occupant and the object based on user profile data associated with a user profile applicable to the occupant.

7. The system of claim 6, wherein a range of movement of a seat of the vehicle is restricted based on the user profile data.

8. The system of claim 1, wherein the computer executable components further comprise:
a seating arrangement component that, using a seating arrangement model generated using machine learning applied to past seating arrangements of other occupants of other vehicles, other than occupants of the vehicle, generates a seating arrangement recommendation applicable to occupants of the vehicle, comprising the occupant, wherein the seating arrangement recommendation is determined to mitigate an impact between the occupant and the object.

9. The system of claim 8, wherein the seating arrangement component further generates the seating arrangement recommendation based on user profile data associated with a user profile applicable to the occupant.

10. The system of claim 8, wherein the seating arrangement recommendation optimizes leg spacing of occupants of the vehicle, comprising the occupant.

11. A non-transitory machine-readable medium, comprising executable instructions that, when executed by a processor, facilitate performance of operations, comprising:

determining a distance between an occupant of a vehicle and an object of the vehicle; and
based on the distance, facilitating an action determined to mitigate an impact between the occupant and the object.

12. The non-transitory machine-readable medium of claim 11, wherein the occupant comprises a third row seat occupant and the object comprises a rear seat of the vehicle, and wherein the action determined to mitigate the impact between the occupant and the object comprises moving the rear seat forward to increase the distance between the occupant and the object.

13. The non-transitory machine-readable medium of claim 11, wherein the occupant comprises a third row seat occupant and the object comprises a rear seat of the vehicle, and wherein the action determined to mitigate the impact between the occupant and the object comprises tilting the rear seat to increase the distance between the occupant and the object.

14. A method, comprising:

determining, by a system comprising a processor, a distance between an occupant of a vehicle and an object of the vehicle; and
based on the distance, facilitating, by the system, an action determined to mitigate an impact between the occupant and the object.

15. The method of claim 14, further comprising:
using a seating arrangement model generated using machine learning applied to past seating arrangements of other occupants of other vehicles, other than occupants of the vehicle, generating, by the system, a seating arrangement recommendation applicable to occupants of the vehicle, comprising the occupant, wherein the seating arrangement recommendation is determined to mitigate an impact between the occupant and the object.

ONBOARD VEHICLE SYSTEM 104

INPUT DEVICE 106

VEHICLE ELECTRONIC SYSTEMS/DEVICES 108

OPERATING SYSTEM 120

COMPUTER EXECUTABLE COMPONENTS 122

OTHER VEHICLE APPLICATION(S) 124

COMPUTING DEVICE 110

INTERFACE PORTS 126

COMMUNICATION UNIT 128

SYSTEM BUS 130

MEMORY 118

PROCESSING UNIT 116

NETWORK(S) 114

EXTERNAL DEVICE(S) 112

100

102

FIG. 1

EP 4 427 989 A1

FIG. 2

EP 4 427 989 A1

VEHICLE ELECTRONIC SYSTEMS/DEVICES **108**

DISTANCE SENSOR(S) **302**

SEAT(S) **304**

POSITION SENSOR(S) **306**

MOTORS **308**

COLLISION SENSOR(S) **310**

SEATBELT SYSTEM(S) **312**

AIRBAG SYSTEM(S) **314**

DISPLAY(S) **316**

SPEAKER(S) **318**

**FIG. 3**

EXTERNAL DEVICE(S) 112

402

404

FIG. 4

Vehicle Specific Data: **A**

Radar Front Right: **F2**

Radar Rear Right: **R2**

102

504

508

**D2**

520

524

512

502

516

510

514

522

518

506

**D1**

Radar Front Left: **F1**

**B**

Radar Rear Left: **R1**

**FIG. 5A**

FIG. 5B

FIG. 6

EP 4 427 989 A1

FIG. 7A

FIG. 7B

EP 4 427 989 A1

```
┌─────────────┐   ┌─────────────┐   ┌─────────────┐   ┌─────────────┐      ← 800
│  INTERIOR   │   │ FRONT SEAT  │   │             │   │  EXTERIOR   │
│ SENSOR DATA │   │  POSITION   │   │CRASH SENSING│   │  SENSORS    │
│  (CAMERA,   │   │  SENSORS    │   │    806      │   │  (CAMERA,   │
│ RADAR, ETC.)│   │    804      │   │             │   │ RADAR, ETC.)│
│    802      │   │             │   │             │   │    808      │
└──────┬──────┘   └──────┬──────┘   └──────┬──────┘   └──────┬──────┘
       │                 │                 │                 │
       ▼                 ▼                 ▼                 ▼
┌─────────────┐   ┌─────────────┐   ┌─────────────┐   ┌─────────────┐
│ FRONT SEAT  │   │ FRONT SEAT  │   │             │   │             │
│ POSITIONING;│   │  POSITION;  │   │             │   │             │
│  REAR SEAT  │   │LONGITUDINAL │   │   CRASH     │   │  PRE-CRASH  │
│  OCCUPANT   │   │  BACKREST   │   │  DETECTED   │   │  DETECTION  │
│CLASSIFICATION│  │ANGLE, ETC.  │   │    814      │   │    816      │
│    810      │   │    812      │   │             │   │             │
└──────┬──────┘   └──────┬──────┘   └──────┬──────┘   └──────┬──────┘
       │                 │                 │                 │
       ▼                 ▼                 ▼                 ▼
┌─────────────────────────────────────────────────────────────────┐
│    ADAPTIVE SEATBELT SETTING FOR SITUATIONAL OPTIMIZATION         │
│                            818                                   │
└─────────────────────────────────────────────────────────────────┘
```

**FIG. 8**

900

902 — USING A SENSOR OF A VEHICLE, DETERMINING A FIRST POSITION OF AN OCCUPANT OF THE VEHICLE AND A SECOND POSITION OF AN OBJECT IN THE VEHICLE

904 — DETERMINING A DISTANCE BETWEEN THE OCCUPANT AND THE OBJECT

**FIG. 9**

1000

**1002** ── DETERMINING A DISTANCE BETWEEN AN OCCUPANT OF A VEHICLE AND AN OBJECT OF THE VEHICLE

**1004** ── DISTANCE THRESHOLD SATISFIED?

NO

YES

**1006** ── BASED ON THE DISTANCE, FACILITATING AN ACTION DETERMINED TO MITIGATE AN IMPACT BETWEEN THE OCCUPANT AND THE OBJECT

**FIG. 10**

FIG. 11

FIG. 12

EP 4 427 989 A1

Europäisches
Patentamt

European
Patent Office

Office européen
des brevets

# EUROPEAN SEARCH REPORT

Application Number

EP 24 16 2029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 557 723 A (FORD GLOBAL TECH LLC [US]) 27 June 2018 (2018-06-27) | 1,5-7, 11,14 | INV. B60R21/015 B60R21/01 |
| Y | * paragraphs [0009], [0027], [0028], [0029], [0030], [0035], [0035]; figures 1-6 * | 6-10,15 | |
| Y | US 2023/030426 A1 (GLAZMAN VLADIMIR [IL] ET AL) 2 February 2023 (2023-02-02) * paragraphs [0007], [0101], [172278], [0279], [0286], [0367], [0368]; figures 1-10 * | 6,7 | |
| Y | US 2022/371477 A1 (BEN ABDELAZIZ OMAR [FR] ET AL) 24 November 2022 (2022-11-24) * paragraphs [0040], [0042], [0082], [0094], [0100], [0133]; figures 1-4 * | 8-10,15 | |
| X | GB 2 562 588 A (FORD GLOBAL TECH LLC [US]) 21 November 2018 (2018-11-21) * paragraphs [0040], [0042], [0046], [0053], [0061], [0073]; figures 1-6 * | 1-4, 11-14 | |
| | | | TECHNICAL FIELDS SEARCHED (IPC) |
| A | US 2017/036565 A1 (OHNO MITSUYOSHI [JP] ET AL) 9 February 2017 (2017-02-09) * paragraphs [0076], [0104]; figures 6, 10 * | 2,3 | B60R |
| A | US 2019/299897 A1 (GRAMENOS JAMES N [US]) 3 October 2019 (2019-10-03) * paragraphs [0042], [0060], [0116], [0121], [0122]; figures 1-20 * | 1-15 | |
| A | US 2019/375312 A1 (PETERSSON MAX [SE] ET AL) 12 December 2019 (2019-12-12) * paragraphs [0028], [0060] - paragraph [0072]; figures 1-9 * | 8,9,15 | |

The present search report has been drawn up for all claims

| Place of search | Date of completion of the search | Examiner |
|---|---|---|
| The Hague | 10 July 2024 | Harder, Sebastian |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 24 16 2029

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | | Publication date | Patent family member(s) | | Publication date |
|---|---|---|---|---|---|
| GB 2557723 | A | 27-06-2018 | CN | 107985241 A | 04-05-2018 |
| | | | DE | 102017124769 A1 | 26-04-2018 |
| | | | GB | 2557723 A | 27-06-2018 |
| | | | RU | 2017134416 A | 03-04-2019 |
| | | | US | 2018111575 A1 | 26-04-2018 |
| US 2023030426 | A1 | 02-02-2023 | EP | 3720739 A1 | 14-10-2020 |
| | | | US | 2021179117 A1 | 17-06-2021 |
| | | | US | 2023030426 A1 | 02-02-2023 |
| | | | WO | 2019111244 A1 | 13-06-2019 |
| US 2022371477 | A1 | 24-11-2022 | CN | 115366755 A | 22-11-2022 |
| | | | DE | 102022112019 A1 | 24-11-2022 |
| | | | FR | 3123027 A1 | 25-11-2022 |
| | | | US | 2022371477 A1 | 24-11-2022 |
| GB 2562588 | A | 21-11-2018 | CN | 108621883 A | 09-10-2018 |
| | | | DE | 102018106687 A1 | 27-09-2018 |
| | | | GB | 2562588 A | 21-11-2018 |
| | | | RU | 2018108207 A | 09-09-2019 |
| | | | US | 2018272977 A1 | 27-09-2018 |
| US 2017036565 | A1 | 09-02-2017 | BR | 102016017566 A2 | 07-02-2017 |
| | | | CN | 106427676 A | 22-02-2017 |
| | | | EP | 3135531 A1 | 01-03-2017 |
| | | | JP | 6350438 B2 | 04-07-2018 |
| | | | JP | 2017030636 A | 09-02-2017 |
| | | | RU | 2016131489 A | 06-02-2018 |
| | | | US | 2017036565 A1 | 09-02-2017 |
| US 2019299897 | A1 | 03-10-2019 | NONE | | |
| US 2019375312 | A1 | 12-12-2019 | CN | 110576818 A | 17-12-2019 |
| | | | EP | 3581440 A1 | 18-12-2019 |
| | | | US | 2019375312 A1 | 12-12-2019 |

EPO FORM P0459

For more details about this annex : see Official Journal of the European Patent Office, No. 12/82

**EP 4 427 989 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63488797